# EUROPEAN PATENT APPLICATION

(11) **EP 3 628 169 A1**
(43) Date of publication of application: **01.04.2020**
(21) Application number: 18196496.6
(22) Date of filing: 25.09.2018
(51) Int. Cl.: A23K 20/121, A23K 50/10

(54) **3H-1,2-DITHIOL-DERIVATIVES FOR REDUCING METHANE EMISSION IN RUMINANTS**

(71) Applicant: DSM IP Assets B.V., 6411 TE Heerlen (NL)
(72) Inventor: LAEUGER, Stefan Karl, 4303 Kaiseraugst (CH); LETINOIS, Ulla, 4303 Kaiseraugst (CH); STEMMLER, René Tobias, 4303 Kaiseraugst (CH)
(74) Representative: Berg, Katja

(57) **Abstract**

The present invention relates to the use of certain 3H-1,2-dithiol derivatives for reducing the production of methane by methanogenic archaea and in particular as an active compound in animal feed for reducing the formation of methane emanating from the digestive activities of ruminants.

## Description

The present invention relates to the use of certain 3H-1,2-dithiol derivatives for reducing the production of methane by methanogenic archaea and in particular as an active compound in animal feed for reducing the formation of methane emanating from the digestive activities of ruminants.

The average temperature of the air surrounding the earth is increasing, a process referred to as global warming. One of the main focuses to reduce this warming effect is to reduce the amount of greenhouse gases emitted into the atmosphere. Greenhouse gases are emitted from several different sources, both natural and artificial; however, the two sources with the most emphasis are the agricultural and fossil fuel industries. Within agriculture, ruminants and in particular cattle are the major contributors to the biogenic methane formation, and it has been estimated that the prevention of methane formation from ruminants would almost stabilize atmospheric methane concentrations.

Methane emission from the ruminant livestock sector - a by-product from enteric fermentation of plant biomass in the ruminant digestive system - is produced by methanogenic archaea. Various attempts have been made in the last decade to mitigate methane production from ruminant animals. Although the approaches vary, the most popular method so far are feed additives which act in the rumen fluid by reducing respectively inhibiting the methane production by methanogenic archaea.

A number of products such as antibiotics but also non-antibiotic products (e.g. bile acid derivatives, nitrooxy compounds) or plant extracts (e.g. garlic, yucca or rhubarb) have been described as potent solutions to reduce methane emission in ruminants. However, so far none of these solutions made it yet to a commercial product.

Thus, there is still an ongoing need for highly efficient agents which effectively reduce the methane production of methanogenic archaea and are thus suitable for reducing the formation of methane emanating from the digestive activities of ruminants. Furthermore, such agents should be readily usable as feed additive and be in line with reliable and generally accepted practice (e.g. producible at competitive cost, storage stable, non-toxic) and not of a medicinal nature.

Surprisingly, it has now been found that certain 3H-1,2-dithiol derivatives are able to effectively inhibit the methane formation in the rumen fluid at very low concentrations.

Therefore, in a first embodiment the present invention relates to the use of at least compound of formula (I) 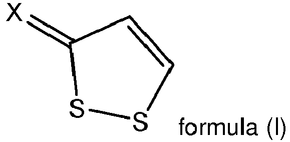 wherein
X is O, S or N-R and
R is selected from the group of H, OH, alkyl, alkenyl, aryl, heteroaryl and aralkyl, and which compounds of formula (I) encompass in case of X = N-R also the respective salts thereof,
as an active compound for reducing the production of methane by methanogenic archaea, in particular in the rumen fluid.

In another embodiment the present invention also provides the use of at least one compound of formula (I) as an active compound in animal feeding for reducing the formation of methane emanating from the digestive activities of ruminants.

The invention further provides a method for reducing the production of methane emanating from the digestive activities of ruminants, said method comprising oral administration of an effective amount of at least one compound of formula (I) to the ruminant.

In a further embodiment, the present invention also relates to an animal feed, an animal feed composition and feed additive comprising at least one compound of formula (I).

The term animal feed, feed composition orfeed additive refers to any compound, preparation, mixture, or composition suitable for, or intended for intake by an animal.

The term 'oral administration' as used herein refers to simple/ normal feeding or to the administration of a bolus.

The term 'alkyl' as used herein refers to linear, cyclic or branched alkyl groups which are saturated. Preferably, in all embodiments of the present invention, the alkyl group is selected from the group of linear C₁₋₁₅ alkyl groups or branched C₃₋₁₅alkyl groups, more preferably from the group of linear C₁₋₁₀ alkyl groups or branched C₃₋₁₀ alkyl groups, most preferably from the group of methyl, ethyl, propyl, isopropyl, isobutyl or tert-butyl. Most preferred alkyl groups according to the present invention are methyl or ethyl groups.

The term 'alkenyl' as used herein refers to linear or branched alkyl chains d which have at least one carbon-carbon double bond, which may be (independently from each other) in (E) or (Z)-configuration. Preferably, in all embodiments of the present invention, the alkyl group is selected from the group of linear C₂₋₁₅ alkenyl groups or branched C₃₋₁₅ alkenyl groups, more preferably from the group of linear C₂₋₁₀ alkenyl groups or branched C₃₋₁₀ alkenyl groups, most preferably from the group of linear or branched C₃₋₆ alkenyl groups. Most preferably, the carbon-carbon double bond is not adjacent to the nitrogen but at least separated by on CH2-group.

The term 'aryl' as used herein refers to aromatic hydrocarbons containing 5 to 30 carbon atoms and containing a single aromatic or multiple aromatic rings that are fused together, directly linked or indirectly linked (such that the different aromatic rings are bound to a common group such as a methylene or ethylene moiety) and which may optionally be substituted, preferably by at least one methyl and/ or methoxy group. Preferably, in all embodiments of the present invention, the term 'aryl' refers to aromatic hydrocarbons containing 5 to 20, more preferably 5 to 12 carbon atoms which are optionally substituted by at least one methyl group, more preferably to phenyl, p-, m-, o-tolyl, xylyl, naphthyl and biphenyl. The most preferred aryl group according to the present invention is phenyl.

The term 'heteroaryl' as used herein refers to groups comprising a single ring or two or three fused rings, where at least one of the rings is an aromatic ring that contains from one to four heteroatoms selected from N, O, and S as ring members (i.e., it contains at least one heteroaromatic ring). Non-limiting examples of heteroaryl groups are 1-pyrrolyl, 2-pyrrolyl, 3-pyrrolyl, 3-pyrazolyl, 2-imidazolyl, 4-imidazolyl, pyrazinyl, 2-oxazolyl, 4-oxazolyl, 2-phenyl-4-oxazolyl, 5-oxazolyl, 3-isoxazolyl, 4-isoxazolyl, 5-isoxazolyl, 2-thiazolyl, 4-thiazolyl, 5-thiazolyl, 2-furyl, 3-furyl, 2-thienyl, 3-thienyl, 2-pyridyl, 3-pyridyl, 4-pyridyl, 2-pyrimidyl, 4-pyrimidyl, 5-benzothiazolyl, purinyl, 2-benzimidazolyl, 5-indolyl, 1-isoquinolyl, 5-isoquinolyl, 2-quinoxalinyl, 5-quinoxalinyl, 3-quinolyl, and 6-quinolyl.

By term 'aralkyl' is meant an aryl as defined above, which is connected through an aliphatic side chain, preferably a C₁₋₃ aliphatic side chain to the nitrogen. Suitable aralkyl according to the present invention include e.g. benzyl.

The term 'an effective amount' refers to an amount necessary to obtain a physiological effect. The physiological effect may be achieved by one application dose or by repeated applications. The dosage administered may, of course, vary depending upon known factors, such as the physiological characteristics of the particular composition comprising the compound of formula (I) with the definitions and preferences as given above, optionally in combination with further ingredients and/ or actives and its mode and route of administration; the age, health and weight of the recipient; the kind of concurrent treatment; the frequency of treatment; and can be adjusted by a person skilled in the art.

It is well understood that the compounds according to the present invention, if applicable, encompass all possible isomeric forms such as in particular the respective (E) and (Z) isomers as well as mixtures thereof.

When X is N-R, the compounds of formula (I) also comprise the respective salts thereof such as the acid addition salts. Suitable salts according to the present invention encompass any salt which is suitable for nutritional purposes such as particularly pharmaceutically acceptable salts, more particularly the sulfate and hydrochloride salts without however being limited thereto. In a preferred embodiment, however, all compounds of formula (I) are used in their free (non-salt) form.

**Table 1: Preferred compounds of formula (I) according to the present invention**

| **#** | **Molecular structure** | **Chemical name** |
|---|---|---|
| 1 | 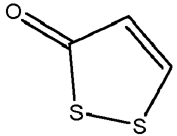 | 3*H*-1,2-dithiol-3-one |
| 2 | 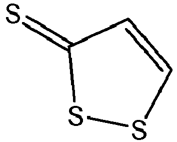 | 3*H*-1,2-dithiol-3-thione |
| 3 | 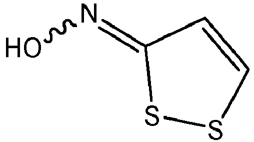 | 3*H*-1,2-dithiol-3-one oxime |
| 4 | 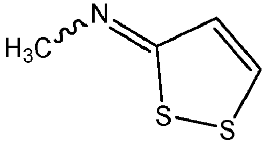 | *N*-methyl-3*H*-1,2-dithiol-3-imine |
| 5 | 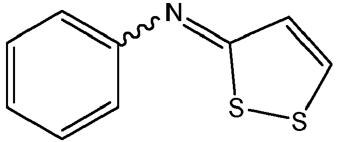 | *N*-phenyl-3*H*-1,2-dithiol-3-imine |

The most preferred compound in all embodiments of the present invention is 3H-1,2-dithiol-3-thione [CAS No: 534-25-8].

The compounds of the present invention are either commercially available or can be readily manufactured according to synthetic methods known *per se* for dithiol compounds such as e.g. disclosed in Synthesis 1977, 802-80, Tetrahedron Letters 2014, 55, 5283-5285, Chemical Reviews (1965), 65, 237-245, Phosphorus and Sulfur and the Related Elements (1985), 25(2), 193-200; and Justus Liebigs Annalen der Chemie (1965), 688, 150-64.

In all these cases appropriate methods to purify the compounds of formula (I) can be chosen by those skilled in the art, i.e. by column chromatography or distillation or recrystallisation.

For the use in animal feed, however, the compound of formula (I) with all the preferences and definitions as given herein does not need to be very pure; it may e.g. include other compounds and derivatives.

Methane emission by ruminants can easily be measured in vitro by a modified version of the Hohenheim Forage value test as e.g. disclosed in WO2012/084629. It can also be measured in individual animals in metabolic chambers by methods known in the art (Grainger et al., 2007 J. Dairy Science; 90: 2755-2766). Moreover, it can also be assessed at barn level by an emerging technology using laser beam (McGinn et al., 2009, Journal of Environmental Quality; 38: 1796-1802). Alternatively, methane produced by a dairy ruminant can also be assessed by measurement of VFA profiles in milk according to WO 2009/156453.

The at least one compound of formula (I) with all the definitions and preferences as given herein can either be administered alone (i.e. as sole methane reducing ingredient) or in combination with at least one additional active substance which shows similar effects with regard to methane formation (reduction) in the rumen such as e.g. 3-nitrooxypropanol, diallyl disulfide, garlic oil, allyl isothiocyanate, deoxycholic acid as well as chenodeoxycholic acid and derivatives thereof.

Further components that could be given together with the compound of formula (I) according to the present invention are for example yeasts, essential oils, and ionophores like Monensin and/ or Rumensin.

It is at present contemplated that 3-nitrooxypropanol, diallyl disulfide, garlic oil, allyl isothiocyanate deoxycholic acid, chenodeoxycholic acid and derivatives thereof are independently administered in dosage ranges of for example 0.01-500 mg active substance per kg feed (ppm). These compounds are either commercially available or can easily be prepared by a skilled person using processes and methods well-known in the prior art.

Ruminating mammals according to the present invention include cattle, goats, sheep, giraffes, American Bison, European bison, yaks, water buffalo, deer, camels, alpacas, llamas, wildebeest, antelope, pronghorn, and nilgai.

For all embodiments of the present invention, domestic cattle, sheep and goat are the more preferred species. For the present purposes most preferred species are domestic cattle. The term includes all races of domestic cattle, and all production kinds of cattle, in particular dairy cows and beef cattle.

The normal daily dosage of the compound of formula (I) with all the definitions and preferences as given herein provided to an animal by feed intake depends upon the kind of animal and its condition. Normally this dosage should be in the range of from about 1 mg to about 10 g, preferably from about 10 mg to about 1 g, more preferably, 50 mg to 500 mg compound per kg of feed.

Preferably the daily dosage is administered in doses which are separated in time from each other by at least 5 hours, preferably by at least 10 hours, most preferably by at least 20 hours.

Another particular suitable dosage is selected such that the concentration of the compound of formula (I) with all the definitions and preferences as given herein in the rumen liquid is at least 20 µM, more preferably at least 50 µM, most preferably at least 80 µM. Preferably, the dosage is selected such that the concentration of the compound of formula (I) in the rumen liquid is selected in the range of 20 to 1000 µM, more preferably in the range of 30 to 500 µM, most preferably in the range of 50 to 250 µM. Such dosages can easily be established by a person skilled in the art by taking a sample of the rumen fluid according to standard methods in the art.

In a particular embodiment, the present invention accordingly also relates to the use or the methods according to the present invention, wherein the amount of at least one compound of formula (I) administered to the ruminant animal ranges from 1 mg to 10 g per kg of feed, preferably from 10 mg to 1 g per kg of feed, more preferably, from 50 mg to 500 mg per kg of feed.

The present invention further relates to the use or the methods according to the present invention, wherein the methane production in ruminants calculated in liters per kilogram of dry matter intake is reduced by at least 10 % when measured in metabolic chambers. Preferably, methane reduction is at least 15 %, more preferably, at least 20 %, even more preferably, at least 25 %, most preferably, at least 30 %. Alternative methane emission measurements may also be used like using a laser beam, a or modified version of the Hohenheim Forage value test, or for dairy ruminants, correlating methane production to the VFA profile in milk.

As indicated above, the compounds of formula (I) of the present invention are useful as ingredients for animal feed, feed compositions and feed additives for ruminants, and accordingly are useful as the active ingredients in such feed to reduce methane formation in the digestive tract of the animal.

For the realisation of their use as such ingredients in the feed of ruminants, the compounds of formula (I) according to the present invention may be incorporated in the feed by methods known per se in the art of feed formulation and processing.

Preferably, the animal feed, feed composition or feed additive is a ruminant animal feed, feed composition or feed additive such as a ruminant base mix. In another preferred embodiment, the animal feed, feed composition or feed additive is a mineral premix, a vitamin premix including vitamins and minerals or a bolus.

The so-called premixes are examples of animal feed additives and are also part of the invention. A premix designates a preferably uniform mixture of one or more micro-ingredients with diluents and/or carrier. Premixes are used to facilitate uniform dispersion of micro-ingredients in a larger mix.

The at least one compound of formula (I) according to the present invention may be used in combination with conventional ingredients present in animal feed, feed compositions or feed additives such as carbonates, electrolytes such as ammonium chloride, proteins such as soya bean meal, wheat, starch, sunflower meal, corn, meat and bone meal, amino acids, animal fat, vitamins and trace minerals.

Apart from the compound of formula (I), the premix of the invention contains preferably at least one fat-soluble vitamin, and/or at least one water soluble vitamin, and/or at least one trace mineral, and/or at least one macro mineral. In other words, the premix of the invention comprises at least one compound according to the invention together with at least one additional component selected from the group consisting of fat-soluble vitamins, water-soluble vitamins, trace minerals, and macro minerals.

Macro minerals may also be separately added to the feed. Therefore, in a particular embodiment, the premix comprises the active ingredients of the invention together with at least one additional component selected from the group consisting of fat-soluble vitamins, water-soluble vitamins, and trace-minerals.

In view of feed compositions for ruminants such as cows, as well as ingredients thereof, the ruminant diet is usually composed of an easily degradable fraction (named concentrate) and a fiber-rich, less readily degradable fraction (named hay, forage, or roughage).

Hay is made of dried grass, legume or whole cereals. Grasses include among others timothy, ryegrasses, fescues. Among others, legumes include clover, lucerne or alfalfa, peas, beans and vetches. Whole cereals include among others barley, maize (corn), oat, sorghum. Other forage crops include sugarcane, kales, rapes, and cabbages. Also, root crops such as turnips, swedes, mangles, fodder beet, and sugar beet (including sugar beet pulp and beet molasses) are used to feed ruminants. Even further crops are tubers such as potatoes, cassava and sweet potato. Silage is an ensiled version of the fiber-rich fraction (e.g. from grasses, legumes or whole cereals) whereby material with a high-water content is treated with a controlled anaerobic fermentation process (naturally-fermented or additive treated).

Concentrate is largely made up of cereals (such as barley including brewers grain and distillers grain, maize, wheat, sorghum), but also often contain protein-rich feed ingredients such as soybean, rapeseed, palm kernel, cotton seed and sunflower.

Cows may also be fed total mixed rations (TMR), where all the dietary components, e.g. forage, silage and concentrate, are mixed before serving.

As mentioned above a premix is an example of a feed additive which may comprise the active compounds of formula (I) according to the invention. It is understood that the compounds may be administered to the animal in different other forms. For example, the compounds can also be included in a bolus that would be placed in the rumen and that would release a defined amount of the active compounds continuously in well-defined dosages over a specific period of time.

The present invention is further described by the following examples which should not be construed as limiting the scope of the invention.

### Examples

### Example 1: In vitro test for methane production

A modified version of the "Hohenheim Forage value Test (HFT)" was used for testing the effect of specific compounds on the rumen functions mimicked by this in-vitro system.

*Principle:* Feed (i.e. a TMR) (300 mg) is given into a syringe with a composition of rumen liquor, an appropriate mixture of buffers (i.e. rumen-fluid buffer mix: 25 ml) and the active to be tested. The obtained feed mixture is subsequently incubated at 39°C for 8h. Then the volume and composition of the gas produced is assessed against the control (i.e. the respective feed mixture without the active).

### Reagents:

### Resazurin-solution (indicator solution)

- *1 g*/*L stock solution*
- *1.71 mL for the whole experiment.*

### Mass element solution:

- 6.2 g potassium dihydrogen phosphate (KH2PO₄)
- 0.6 g magnesium sulfate heptahydrate (MgSO₄ * 7H₂O)
- 9 ml concentrated phosphoric acid (1 mol/l)
- dissolved in distilled water to 1 l (pH about 1.6)

### Buffer solution:

- 35.0 g sodium hydrogen carbonate (NaHCO₃)
- 4.0 g ammonium hydrogen carbonate ((NH₄)HCO₃)
- dissolved in distilled water to 1 l

### Trace element solution:

- 13.2 g calcium chloride dihydrate (CaCl₂ * 2H₂O)
- 10.0 g manganese(II) chloride tetrahydrate (MnCl₂ * 4H₂O)
- 1.0 g cobalt(II) chloride hexahydrate (CoCl₂ * 6H₂O)
- 8.0 g iron(III) chloride (FeCl₃ * 6H₂O)
- dissolved in distilled water to 100 ml

### Sodium salt solution:

- 100 mg sodium salt
- dissolved in distilled water to 100 ml

### Reduction solution:

- first 3 ml sodium hydroxide (c = 1 mol/l), then 427.5 mg sodium sulfide hydrate (Na₂S * H₂O) are added to 71.25 ml H₂O
- solution must be prepared shortly before it is added to the medium solution

### Procedure:

### Sample weighing:

TMR (44 % concentrate, 6 % hay, 37 % maize silage and 13 % grass silage) is sieved to 1mm and weighed exactly into the syringes. One run contains 4 repetitions, each with 16 syringes and comprises carrier controls, which display the gas production in the presence of the carrier (solvent) only (i.e. DSMO/ EtOH used to dissolve the active) and the test samples (in the carrier), which contain the test substances in a concentration of 100µmol/l.

### Preparation of the medium solution:

The components are mixed in a Woulff bottle in following order:
- 711 ml water
- 0.18 ml trace element solution
- 355.5 ml buffer solution
- 355.5 ml mass element solution
- 1.71 mL Resazurin solution (indicator).

The completed solution is warmed up to 39 °C followed by the addition of 1.83 ml sodium salt solution and the addition of reduction solution at 36 °C. The rumen liquor (750 ml, obtained before feeding the test animals) is added, when the indicator turns colorless under continued agitation and CO₂-gassing.

### Filling the syringes, incubation and determining gas volumes:

The rumen-fluid-buffer-mix is added to the glass syringe prepared as outlined above containing the TMR and the active to be tested. The syringes are then incubated for 8 hours at 39 °C under gentle agitation. After 8 hours the volume of gas produced is measured, and the percentage of methane in the gas phase is determined by gas chromatography.

### Results

Table 1 outlines the methane reduction effect resulting from the average of two experiments versus the carrier control.

**Table 1.**

| **#** | **Structure** | **methane reduction after 8 h** | **Concentration [µM]** |
|---|---|---|---|
| Inv-1 | 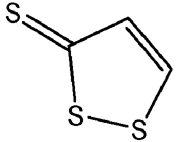 | -96% | 100 |
| Inv-2 | 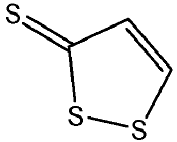 | -59% | 50 |
| Inv-3 | 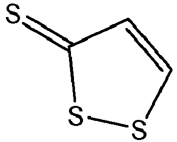 | -16% | 25 |
| Ref-1 | 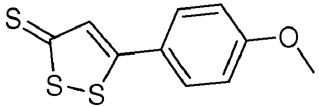 | 0% | 100 |
| Ref-2 | 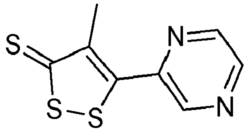 | 0% | 100 |

As can be retrieved from table 1, the compound of formula (I) according to the present invention is particularly suitable to reduce the methane formation, even at very low concentrations while other ditihiols show no activity at all.

## Claims

1. Use of at least one compound of formula (I), 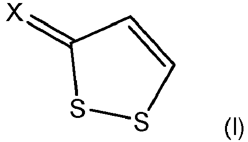 wherein
X is selected from the group of O, S or N-R, and
R is selected from the group of H, OH, alkyl, alkenyl, aryl, heteroaryl and aralkyl, and in case X is N-R also a salt thereof,
as an active compound in animal feeding for reducing the formation of methane emanating from the digestive activities of ruminants.

2. Use according to claim 1, wherein R is selected from the group of linear C₁₋₁₅ alkyl or branched C₃₋₁₅ alkyl groups, preferably from linear C₁₋₁₀ alkyl or branched C₃₋₁₀ alkyl groups, most preferably from methyl, ethyl, propyl, isopropyl, isobutyl or tert-butyl.

3. Use according to claim 1, wherein the compound of formula (I) is selected from the group of 3*H*-1,2-dithiol-3-one, 3*H*-1,2-dithiol-3-thione, 3*H*-1,2-dithiol-3-one oxime, *N*-methyl-3*H*-1,2-dithiol-3-imine, *N*-phenyl-3*H*-1,2-dithiol-3-imine as well as mixtures thereof.

4. Use according to claim 1, wherein the compound of formula (I) is 3*H*-1,2-dithiol-3-thione.

5. Use according to any of claims 1 to 4, wherein at least one organic molecule of formula (I) or the salt thereof is combined with at least one additional active substance selected from the group consisting of 3-nitrooxypropanol, diallyl disulfide, garlic oil, allyl isothiocyanate, deoxycholic acid, chenodeoxycholic acid and derivatives thereof.

6. Use according to any of claims 1 to 5, wherein the ruminant animal is selected from the group consisting of: cattle, goats, sheep, giraffes, American Bison, European bison, yaks, water buffalo, deer, camels, alpacas, llamas, wildebeest, antelope, pronghorn, and nilgai.

7. Use according to any of claims 1 to 6, wherein the methane production in ruminants calculated in liters per kilogram of dry matter intake is reduced by at least 10 % when measured in metabolic chambers.

8. Use according to any of claims 1 to 7, wherein the amount of the at least one active compound as defined in formula (I) or a salt thereof administered to the ruminant animal ranges from 1 mg to 10 g per kg feed.

9. An animal feed, feed composition or feed additive comprising at least one compound of formula (I) or the salt thereof according to any of claims 1 to 5.

10. The composition of claim 9 which is a mineral premix, a vitamin premix, or a premix including vitamins and minerals or a bolus.

11. A method for reducing the production of methane emanating from the digestive activities of ruminants, said method comprising oral administration of an effective amount of at least one compound of formula (I) 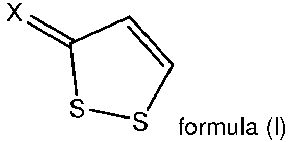 wherein
X is O, S or N-R, and
R is selected from the group of H, OH, alkyl, alkenyl, aryl, heteroaryl and aralkyl, and in case X is N-R also the a salt thereof,
to the ruminant.

12. A method according to claim 11, wherein the at least one compound of formula (I) or the salt thereof is administered to the animal in combination with at least one additional active substance selected from the group consisting of 3-nitrooxypropanol, diallyl disulfide, garlic oil, allyl isothiocyanate, deoxycholic acid, chenodeoxycholic acid and derivatives thereof.

13. A method according to claims 11 or 12, wherein the ruminant animal is selected from the group consisting of: cattle, goats, sheep, giraffes, American Bison, European bison, yaks, water buffalo, deer, camels, alpacas, llamas, wildebeest, antelope, pronghorn, and nilgai.

14. A method according to any of claims 11 to 13, wherein the amount of at least one compound of formula (I) or the salt thereof administered to the ruminant animal ranges from 1 mg to 10 g per kg feed.

15. Use of at least one compound of formula (I) 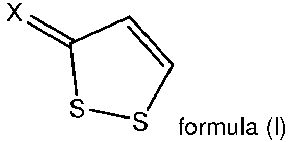 wherein
X is O, S or N-R and
R is selected from the group of H, OH, alkyl, alkenyl, aryl, heteroaryl and aralkyl, and in case X is N-R also a salt thereof,
as an active compound for reducing the formation of methane by methanogenic archaea, preferably in the rumen fluid.
